# EUROPEAN PATENT SPECIFICATION

(11) **EP 3 074 329 B1**
(45) Date of publication and mention of the grant of the patent: **31.10.2018**
(21) Application number: 14828293.2
(22) Date of filing: 27.11.2014
(51) Int. Cl.: B65G 17/06, B65G 17/46

(54) **CONVEYOR CHAIN IN PARTICULAR FOR FOOD PRODUCTS**
TRANSPORTKETTE, INSBESONDERE FÜR LEBENSMITTELPRODUKTE
CONVOYEUR À CHAÎNES DESTINÉ EN PARTICULIER À DES PRODUITS ALIMENTAIRES

(30) Priority: 27.11.2013 IT BO20130650
(43) Date of publication of application: 05.10.2016
(73) Proprietor: Millennium Engineering S.r.l., 35010 Villa del Conte (IT)
(72) Inventor: PRIORE, Luca, I-35010 Villa del Conte (IT)
(74) Representative: Cataldi, Giulia
(86) International application number: PCT/IB2014/066403
(87) International publication number: WO 2015/079412

(56) References cited:
- EP-A1- 0 544 085
- DE-U1-202006 004 102
- GB-A- 2 236 994

## Description

### TECHNICAL FIELD

The present invention relates to a chain conveyor, in particular for food products.

### BACKGROUND ART

In the field of conveying food products, it is known, for example by EP-0544085-A1 that discloses a chain conveyor according to the preamble of claim 1, to manufacture a chain conveyor comprising two ring chains; at least one driving gear wheel mounted to rotate about a rotation axis and feed the ring chains along a given path; and a plurality of support bars, which are mounted between the two ring chains transverse to said path, and define a support surface for the food products to be transported.

Each chain comprises a plurality of rings substantially parallel to a work surface and a plurality of rings transverse to the work surface itself. The parallel rings are spaced apart by rings transverse to the work surface.

The gear wheel has a plurality of teeth adapted to successively couple directly with corresponding rings of at least one of the ring chains.

Such type of chain conveyors can optionally comprise wings, which are fixed by releasable means to the support bars.

Are also known, for example by DE-202006004102-U1, conveyors which include a plurality of wings, each of which is hooked to two adjacent support bars in the vicinity of a chain so as to define respective side edges to laterally delimit the conveyor. Each wing is connected to two adjacent bars and two rings so as to be directed during the chain drive. Furthermore each wing slides along a respective guide. The known type wing has the drawback of constraining together two adjacent rings and two bars. Moreover, the frictions developed by a known wing are high, resulting in a high rate of wear of the wing itself requiring frequent maintenance to replace worn wings. Furthermore the friction between each wing and the respective guide is increased by the connection with two adjacent rings and bars.

In fact, oil is used to reduce the energies involved to promote the sliding.

### DISCLOSURE OF INVENTION

The object of the present invention is to implement a chain conveyor, in particular for food products, which is free from the above drawbacks and which is simple and cost-effective to implement.

This object is achieved by a chain conveyor as claimed in the appended claims.

### BRIEF DECRIPTION OF THE DRAWINGS

The present invention will now be described with reference to the accompanying drawings, which show a nonlimiting example thereof, in which:
figure 1 is a schematic perspective view, with parts removed for clarity, of a preferred embodiment of the chain conveyor of the present invention;
figure 2 is a schematic perspective view, with parts enlarged and parts removed for clarity, of a detail of the chain conveyor in figure 1;
figure 3 is a schematic plan view of a detail of figure 2;
figure 4 is a schematic perspective view, with parts enlarged and parts removed for clarity, of a detail of the chain conveyor in figure 1; and
figure 5 is a perspective, enlarged scale view of a first side of a wing for a chain conveyor according to the present invention;
figure 6 is a perspective, enlarged scale view of a second side of the wing in figure 5;
figure 7 shows, with some parts removed for clarity and in enlarged scale, a variant of the conveyor in figure 1; and
figure 8 shows a first variant of the wing in figure 5; and
figure 9 shows a second variant of the wing in figure 5.

### BEST MODE FOR CARRYING OUT THE INVENTION

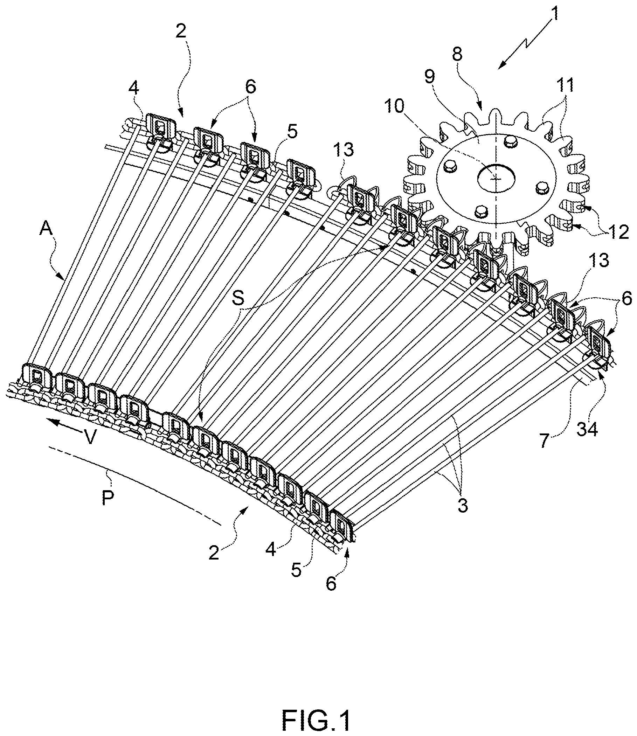

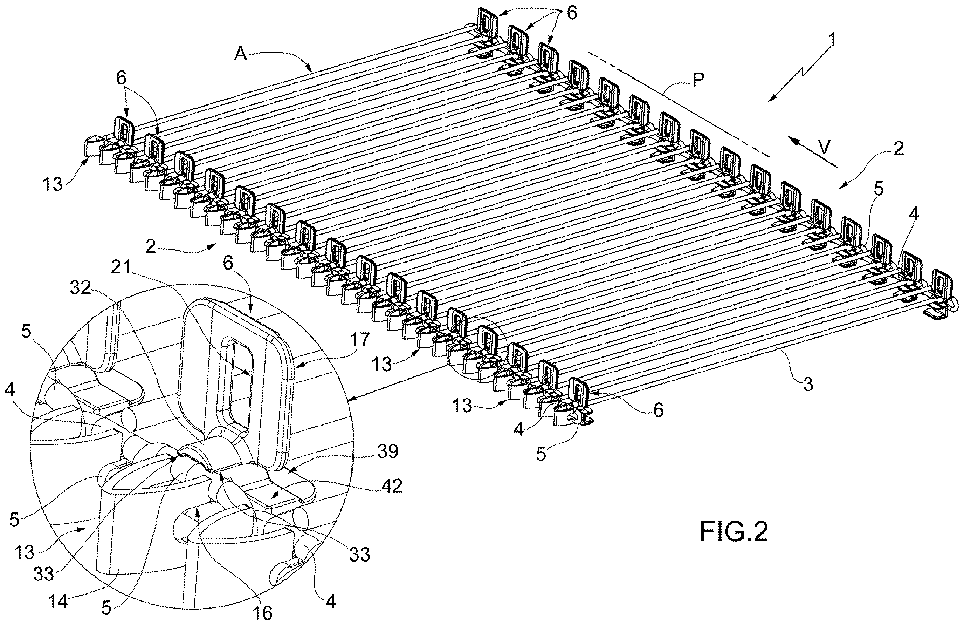

With reference to figures 1 and 2, reference numeral 1 indicates, as a whole, a chain conveyor for successively feeding a plurality of products (not shown), in particular food products, along a given path P.

The chain conveyor 1 comprises two ring chains 2, which are substantially parallel to each other and to path P, and are connected to each other through a plurality of support bars 3 which define a support surface A for the products (not shown), and extend between chains 2 transverse to path P.

Each chain 2 comprises a plurality of rings 4 substantially parallel to surface A, and a plurality of rings 5, each of which is mounted between two rings 4, is connected to the adjacent rings 4, and is substantially perpendicular to surface A.

With reference to the above, it should be noted that, in the specific case:
each ring 4, 5 of a chain 2 is connected to a corresponding ring 4, 5 of the other chain 2 by means of a respective bar 3;
surface A is substantially horizontal; and
rings 4 are substantially horizontal and rings 5 are substantially vertical.

Each chain 2 further has a plurality of sliding wings 6, each of which is attached to a respective vertical ring 5, as will be better described hereafter. Each wing 6 protrudes from the respective ring 5 inward of the chain conveyor 1. As will be better described hereafter, each wing 6 is slidably engaged in an outer edge of a shaped guide 7 substantially parallel to path P. The joining of wings 6 applied to a chain defines a respective side edge S of the chain conveyor 1. Each side edge S is adapted to prevent the fall of products outside of the chain conveyor 1 during the feed in direction V, especially when path P is curved.

The chain conveyor 1 is fed along path P through a driving device 8 comprising at least a motor-driven gear wheel 9, which is mounted to rotate about a rotation axis 10 substantially perpendicular to surface A, and has a plurality of coupling teeth 11 evenly distributed around axis 10 itself.

Each tooth 11 has a slit 12, which is made in an intermediate point of tooth 11, extends through tooth 11 perpendicular to axis 10, and has a concavity facing outwards adapted to allow the coupling between tooth 11 and rings 4.

Each ring 4, 5 of at least one of chains 2 is provided with a relative coupling tooth 13, which protrudes outwards from chain 2 in question, and is arranged on an opposite side of the relative bar 3 with respect to ring 4, 5 itself.

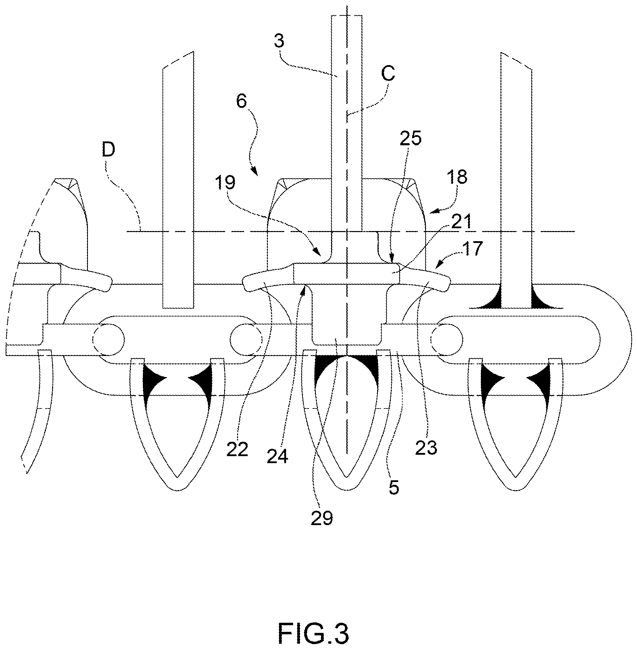

As shown in figures 2 and 3, tooth 13 is obtained from a piece of folded sheet, is substantially U-shaped or V-shaped with concavity facing towards the respective ring 4, 5, and is adapted to couple with teeth 11.

Tooth 13 has two sides 14 facing each other, each of which is delimited by a free end face 15 substantially parallel to axis 10 and is provided with a slot 16, which is obtained through the respective side 14 perpendicular to axis 10 and opens outwards at face 15 itself.

With reference to the above, it should be noted that:
each ring 4 is welded within slots 16 of the respective tooth 13;
each ring 5 is welded to the two faces 15 of the respective tooth 13; and
slots 16 of each tooth 13 connected to a ring 5 allow adjacent rings 4 to extend through sides 14 at the curved portions of path P.
The presence of teeth 13 allows correctly coupling chain 2 with the gear wheel 9, making, in the specific case, chains 2 and teeth 13 of stainless steel, that is to say, of a material suitable for the food sector, and making the gear wheel 9, in the specific case, of a plastic material, in particular a self-lubricating plastic material.

In general, the gear wheel 9 is made of a material having a hardness minor than the hardness of the material used to make chains 2 and teeth 13 so as to cause, preferably, the wear of the gear wheel 9, whose replacement is cheaper than that of chains 2 and of teeth 13.

The configuration of the chain conveyor 1 allows the feed thereof in both directions along path P.

Each wing 6 comprises:
a containment wall 17, which protrudes transversely from surface A;
a sliding block 18 slidably engaged in the outer edge of guide 7; and
a coupling element 19 interposed between wall 17 and the sliding block 18 and releasably connected with a bar 3 and a ring 5 of chain 2.

Each wing 6 is fixed to the respective bar 3 so that wall 17 is substantially parallel to path P.

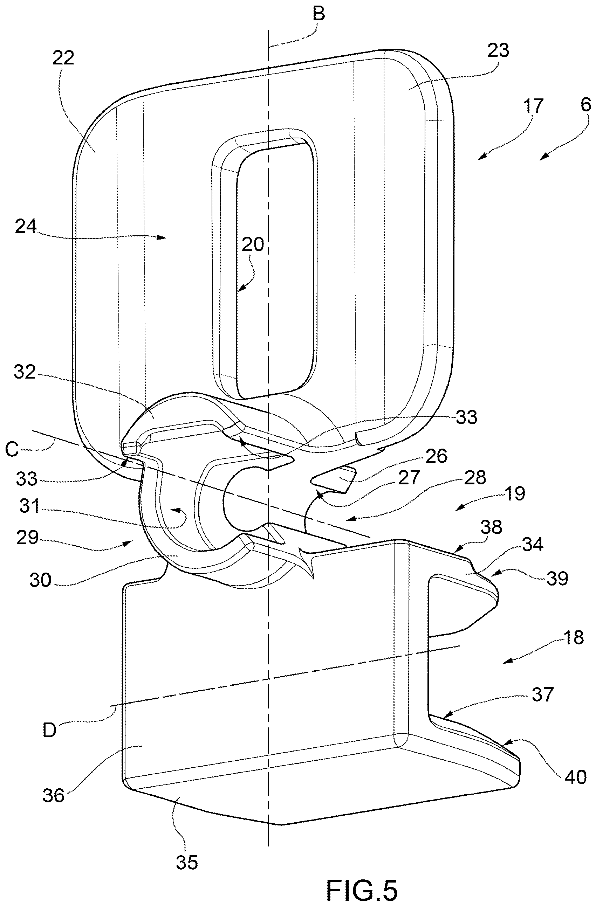

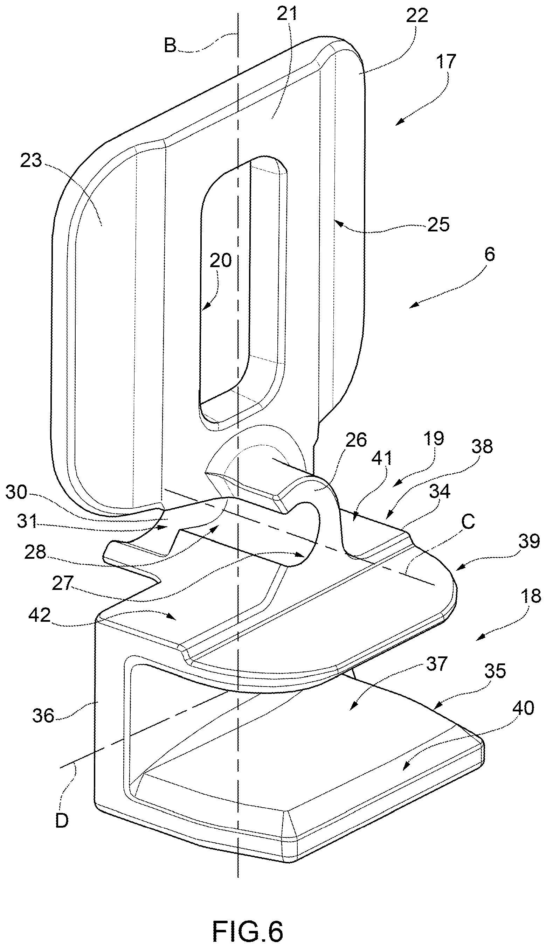

As shown in figures 5 and 6, wall 17 has a longitudinal axis B transverse to surface A. Wall 17 has a cavity 20, which extends parallel to axis B, preferably in a central area of wall 17 itself. In particular, wall 17 has two lateral portions 22, 23 and a central portion 21, which is interposed between the two lateral portions in a direction parallel to path P. Cavity 20 is made in the central portion 21. The central portion 21 has a greater thickness than the lateral portions 22 and 23. Wall 17 has an outer surface 24, which faces towards the outside of the chain conveyor 1 and is smooth. Wall 17 has an inner surface 25, which faces towards the inside of the chain conveyor 1 and has a stepped profile, which is given by the difference in thickness between the central portion 21 and the lateral portions 22 and 23 and by the inclination of the lateral portions 22 and 23 themselves with respect to the central portion 21. The central portion 21 is parallel to the respective ring 5 and, consequently, to path P. The outer surface 24 is slightly curved towards the outside of the chain conveyor 1. The curvature of the outer surface 24 is given by the inclination of the lateral portions 22 and 23 with respect to the central portion 21.

The coupling element 19 in turn comprises a tubular body 26 which has a transversal axis C, particularly perpendicular both to axis B and to path P. The tubular body 26 has a cylindrical cavity 27 coaxial to axis C. The diameter of cavity 27 substantially corresponds to the diameter of bars 3. The tubular body 26 protrudes from the inner surface 25 of wall 17.

The coupling element 19 further comprises an appendage 29, which projects from the inner surface 24 of wall 17 and from the sliding block 18. Appendage 29 is interposed between wall 17 and the sliding block 18 and is centered with the tubular body 26. Appendage 29 comprises a tubular body 30, which is coaxial to the tubular body 26 and has, in turn, a cavity 31. The tubular body 30 has a diameter greater than the tubular body 26. Appendage 19 further comprises an abutment 32, which axially projects from the tubular body 30 and has support faces 33 of abutment 32 against ring 5.

The coupling element 19 has a radial opening 28, which connects cavities 27 and 31 with an area outside wing 6 comprised between wall 17 and the sliding block 18. Opening 28 faces towards a direction opposite to the feeding direction V of the conveyor chain 1. The size of the opening is such as to allow the passage of a bar 3. The coupling element 19 is substantially C-shaped.

The sliding block 18 has a longitudinal axis D substantially parallel to path P. The sliding block 18 comprises an upper wall 34, a lower wall 35 and a lateral wall 36, which is interposed between the upper wall 34 and the lower wall 35. The upper wall 34 and the lower wall 35 are substantially parallel to surface A. The lateral wall 36 is transverse to the upper wall 34 and to the lower wall 35. The upper wall 34 and the lower wall 35 protrude from a same side of the lateral wall 36 delimiting a cavity 37 and so that the sliding block 18 substantially is C-shaped. The upper wall 34 has a portion 38, which is adjacent to the lateral wall 36, and an end portion 39 which protrudes from portion 38 towards the inside of the chain conveyor 1. The coupling element 19 protrudes from portion 38 along axis B. Portion 39 has a smaller thickness than portion 38. Preferably, portion 39 has rounded sides. Edges 40 of the lower wall 35 facing towards cavity 37 are beveled.

The coupling element 19 protrudes from the upper wall 34 and in a decentralized position with respect to axis D of the sliding block 18. In particular, the coupling element 19 divides portion 38 in a front portion 41 and a rear portion 42. The terms front and rear are used taking into account the feeding direction V of the conveyor chain 1. The front portion 41 has a smaller width than the rear portion 42.

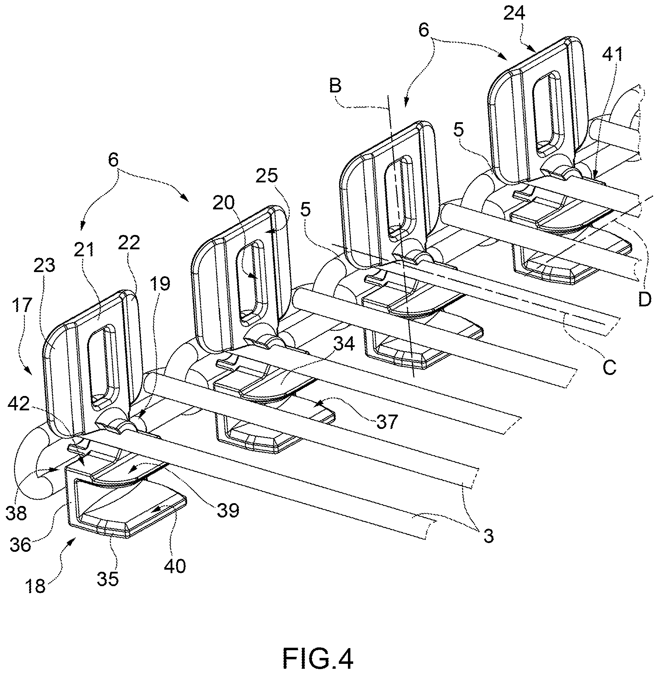

As shown in figures 2 and 4, the coupling element 19 of a wing 6 is engaged with a bar 3 and a vertical ring 5 so that the containment wall 17 is parallel to path P. In particular, the tubular body 26 is fitted around a respective bar 3 so that appendage 29 is in contact with faces 33 against a respective vertical ring 5. The lateral wall 36 of the sliding block 18 is in contact with the respective vertical ring 5. The sliding block 18 is connected, in a known manner and not shown, with a respective guide 7 so as to slide along path P in the feeding direction V. Appendage 29 allows orienting the respective wing 6 so that the containment wall 17 during the feed of the chain in direction V remains parallel to path P. In other words, the appendage 29 is adapted to orient the containment wall 17 in order to keep it parallel to the respective vertical ring 5 during the feed of the respective chain 2.

Wings 6 applied to a chain 2 are specular to wings 6 applied to the other chain 2. In other words, in a chain conveyor 1, the coupling element 19 of a wing 6 applied to the right chain 2 with respect to the feeding direction V is equal and opposite, with respect to axis B of wall 17, to a coupling element 19 of a wing 6 applied to the left chain 2.

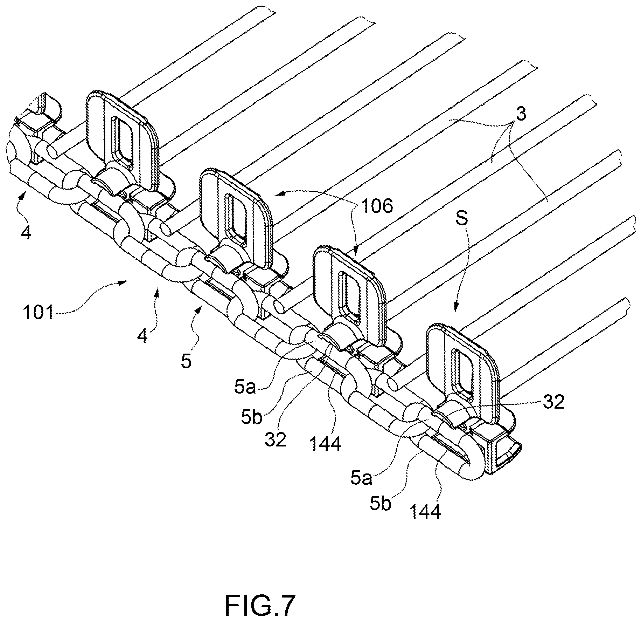

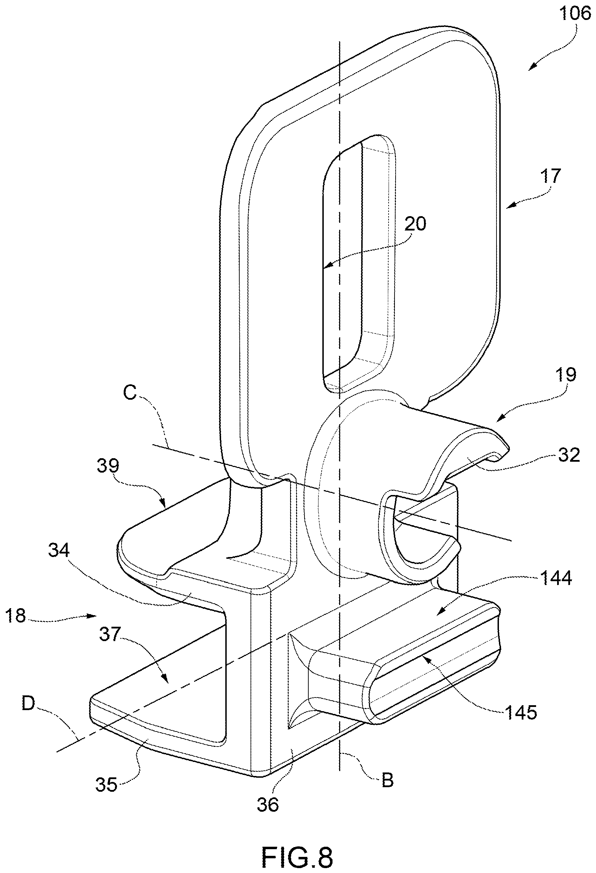

Figure 7 shows a chain conveyor 101, which is a variant of chain conveyor 1. In figure 7, the components in common with the chain conveyor 1 keep the same numbering given above. The chain conveyor 101 comprises a plurality of "left" wings 106, each of which is in contact with a respective vertical ring 5 of the ring chain 2 arranged on the left of the chain conveyor 101 with respect to the feeding direction V. As shown in detail in figure 8, each wing 106 comprises, in turn, a striker element 144, which projects from wall 36 in the opposite direction with respect to the upper wall 34 and the lower wall 35. The striker element 144 is substantially parallel to axis D. The striker element 144 is made in a central portion of the lateral wall 36. The striker element 144 has a longitudinal housing 145 with semicircular section. The striker element 145 is arranged below abutment 32. The striker element 144 is spaced apart from abutment 32 by a distance substantially equal to the width of a vertical ring 5 of the chain conveyor 101.

As shown in figure 7, abutment 32 engages an upper portion 5a of the vertical ring 5 while the striker element 144 engages a lower portion 5b of the vertical ring 5. In particular, abutment 32 rests on the upper portion 5a of the vertical ring 5; while the striker element 144 is in contact with an area facing towards the inside of the conveyor chain 101 of the lower portion 5b. The striker element 144 is partially fitted around the lower portion 5b of the vertical ring 5. The striker element 144 prevents, in use, wing 106 from accidentally rotating about axis B and D. The area of contact between the striker element 144 and the lower portion 5b of the vertical ring 5 is such to prevent accidental twistings of wing 106. In this way, the striker element 144 is adapted to prevent ring 106 from accidentally disengaging from the respective guide 7 during use.

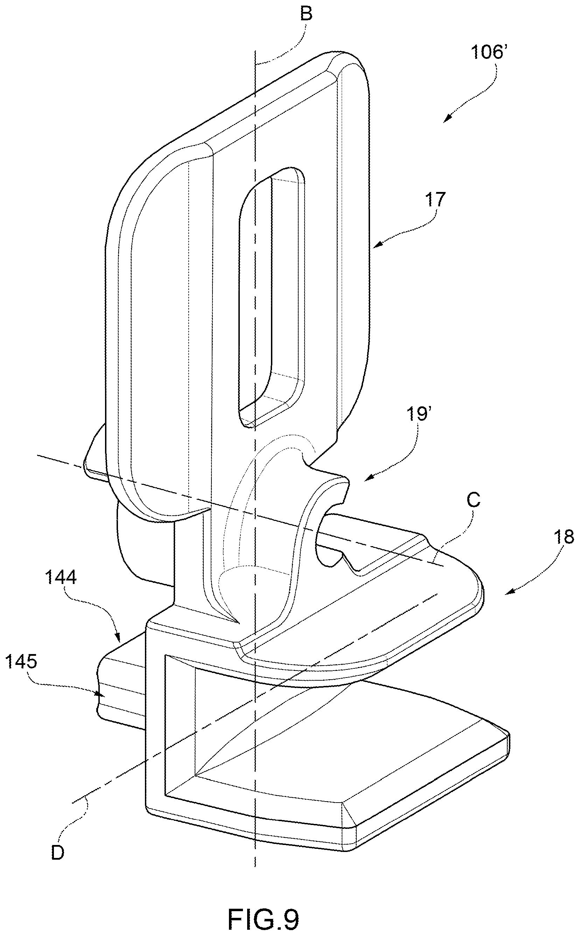

Figure 9 shows a "right" wing 106' similar to the "left" wing 106 and adapted to engage chain 2 of the chain conveyor 101 arranged on the right with respect to the feeding direction V. Wing 106' is similar to wing 106. The coupling element 19' of wing 106' is structurally similar and facing towards the opposite direction with respect to the coupling element 19 of wing 106.

It follows from the above that each wing 6, 106 and 106' is releasably mounted on a single bar 3 and a single vertical ring 5. In this way, it is possible to replace each wing 6, 106 and 106' individually, according to the rate of wear, without having to intervene on the other wings 6, 106 and 106'. Moreover, the coupling element 19 or 19' allows mounting/removing each wing 6, 106 and 106' without the need to intervene on the other components of the chain conveyor 1, 101.

In use, in order to disconnect a wing 6, 106, 106' from the conveyor chain 1 it is sufficient to disengage the tubular body 26 from the respective bar 3 and arrange wing 6, 106, 106' itself in an intermediate area between two adjacent bars 3. Then, wing 6, 106, 106' is rotated so as to disengage the lower wall 35 from guide 7.

The chain conveyor 1, 101 of the type described above has the advantage that bars 3 and rings 4 and 5 of chains 2 are completely released from each other.

Moreover, the friction surfaces between wings 6, 106, 106' of a side edge S of the type shown above are significantly smaller than the friction surfaces of a side edge of a chain conveyor of the conventional type, in which each wing engages two adjacent bars. Therefore, the energies needed to operate the chain conveyor 1 of the type described above are lower than the energy needed for a chain conveyor of the conventional type, with a consequent reduction of production and use costs.

Finally, the times and costs of assembly of wings 6, 106, 106' are substantially halved compared to those for a chain conveyor of the conventional type.

Finally, the times and costs of assembly of wings 6, 106, 106' are substantially halved compared to those for a chain conveyor of the conventional type.

## Claims

1. A chain conveyor (1; 101), in particular for food products, comprising two ring chains (2) having each a respective plurality of rings (4, 5) connected to one another; a plurality of support bars (3), each of which extends between the two ring chains (2) and is connected to corresponding rings (4, 5) of the ring chains (2); a driving gear wheel (9), which is mounted so as to rotate around a rotation axis (10) and feed the ring chains (2) along a given path (P); and a plurality of wings (6; 106; 106'), each of which is engaged with a respective ring chain (2) so as to form a respective side edge (S); wherein the support bars (3) define a support surface (A) for at least one product to be transported, and wherein each ring chain (2) comprises a plurality of first rings (4), which are substantially parallel to the support surface (A), and a plurality of second rings (5), which are alternated with the first rings (4) and are substantially perpendicular to the support surface (A); and wherein each wing (6; 106; 106') is mounted in a releasable manner on a single respective bar (3) and on a single respective ring (4,5); **characterized in that** each wing (6; 106; 106') comprises a containment wall (17), which is transverse to the surface (A) and is substantially parallel to the path (P); a sliding block (18), which is mounted so as to slide on a respective guide (7) extending along the path (P); and a coupling element (19; 19'), which is interposed between the containment wall (17) and the sliding block (18); wherein each coupling element (19; 19') comprises a tubular body (26) having an axis (C) that is transverse to the guide (7) and parallel to said surface (A); wherein the tubular body (26) has a cavity (27), which is suited to house a bar (3) and a radial opening (28), which establishes a connection between said cavity (27) and an external area; wherein the tubular body (26) is fitted around a respective bar (3); in particular, the opening (28) faces the outside in a direction that is opposite to the feeding direction (V); wherein the coupling element (19; 19') comprises, furthermore, an appendage (29), which axially projects from the tubular body (26) towards the respective ring chain (2); wherein the appendage (29) comprises, in turn, an abutment (32) having contact faces (33), which are arranged in contact with a respective ring (4,5); in particular, the abutment (32) leans against the respective ring (4,5).

2. A chain conveyor (1; 101) according to claim 1, wherein the coupling element (19) of each wing (6; 106; 106') engages a respective second ring (5).

3. A chain conveyor (101) according to any of the preceding claims, wherein the wing (106; 106') comprises a striker element (144), which projects from the sliding block (18) towards the respective chain (2); wherein the abutment (32) leans against an upper portion (5a) of the second ring (5); whereas, the striker element (144) is in contact with a lower portion (5b) of said second ring (5); wherein the striker element (144) longitudinally extends on the respective sliding block (18) in order to have an area in contact with the second ring (5) so as to prevent the wing (106; 106') from twisting around an axis (B; D) that is transverse to said path (P).

4. A chain conveyor (1; 101) according to any of the previous claims, wherein a wing (6; 106) applied to a ring chain (2) is mirror-like relative to a wing (106') applied to the other ring chain (2).

## Patentansprüche

1. Ein Kettenförderer (1, 101), insbesondere für Lebensmittelprodukte, mit zwei Ringketten (2), die jeweils eine Mehrzahl von miteinander verbundenen Ringen (4, 5) aufweisen; einer Mehrzahl von Stützstäben (3), die sich jeweils zwischen den beiden Ringketten (2) erstrecken und mit entsprechenden Ringen (4, 5) der Ringketten (2) verbunden sind; einem Antriebszahnrad (9), das so angebracht ist, dass es sich um eine Rotationsachse (10) dreht und die Ringketten (2) entlang eines gegebenen Weges (P) fördert; und einer Mehrzahl von Flügeln (6, 106, 106'), die jeweils mit einer entsprechenden Ringkette (2) so in Eingriff stehen, dass sie eine jeweilige Seitenkante (S) bilden; wobei die Stützstäbe (3) eine Tragfläche (A) für wenigstens ein zu transportierendes Produkt definieren und wobei jede Ringkette (2) eine Mehrzahl von ersten Ringen (4), die im Wesentlichen parallel zu der Tragfläche (A) liegen, und eine Mehrzahl von zweiten Ringen (5), die sich mit den ersten Ringen (4) abwechseln und im Wesentlichen senkrecht zu der Tragfläche (A) liegen, aufweisen; und wobei jeder Flügel (6, 106, 106') in einer lösbaren Weise an einem einzelnen entsprechenden Stab (3) und an einem einzelnen entsprechenden Ring (4, 5) angebracht ist, **dadurch gekennzeichnet, dass** jeder Flügel (6, 106, 106') eine Begrenzungswand (17), die quer zu der Oberfläche (A) und im Wesentlichen parallel zu dem Weg (P) liegt, einen Gleitblock (18), der so angebracht ist, dass er auf einer entsprechenden Führung (7), die sich entlang des Weges (P) erstreckt, angebracht ist, und ein Kupplungselement (19, 19'), das zwischen der Begrenzungswand (17) und dem Gleitblock (18) angeordnet ist, aufweist, wobei jedes Kupplungselement (19, 19') einen rohrförmigen Körper (26) mit einer Achse (C), die quer zu der Führung (7) und parallel zu der Oberfläche (A) verläuft, aufweist, wobei der rohrförmige Körper (26) einen Hohlraum (27) hat, der dazu geeignet ist, einen Stab (3) aufzunehmen, und eine radiale Öffnung (28), die eine Verbindung zwischen dem Hohlraum (27) und einem externen Bereich herstellt, wobei der rohrförmige Körper (26) um einen jeweiligen Stab (3) aufgesetzt ist, wobei insbesondere die Öffnung (28) der Umgebung in einer Richtung zugewandt ist, die entgegengesetzt zu der Förderrichtung (V) liegt, wobei das Kupplungselement (19, 19') außerdem einen Ansatz (29) aufweist, der axial von dem rohrförmigen Körper (26) zu der jeweiligen Ringkette (2) vorsteht, wobei der Ansatz (29) wiederrum einen Anschlag (32) mit Kontaktflächen (33) aufweist, die in Kontakt mit einem jeweiligen Ring (4, 5) angeordnet sind; wobei der Anschlag (32) insbesondere gegen den jeweiligen Ring (4, 5) lehnt.

2. Ein Kettenförderer (1, 101) nach Anspruch 1, wobei das Kupplungselement (19) jedes Flügels (6, 106, 106') an einem jeweiligen zweiten Ring (5) angreift.

3. Ein Kettenförderer (101) nach einem der vorhergehenden Ansprüche, wobei der Flügel (106, 106') ein Anschlagelement (144) aufweist, das von dem Gleitblock (18) zu der jeweiligen Kette (2) vorsteht, wobei der Anschlag (32) gegen einen oberen Bereich (5a) des zweiten Rings (5) lehnt; während das Anschlagelement (144) in Kontakt mit einem unteren Bereich (5b) des zweiten Rings (5) steht; wobei das Anschlagelement (144) sich in Längsrichtung auf dem jeweiligen Gleitblock (18) erstreckt, um einen Bereich in Kontakt mit dem zweiten Ring (5) zu haben, um dadurch zu verhindern, dass sich der Flügel (106, 106') um eine Achse (B, D), die quer zu dem Pfad (P) verläuft, verdreht.

4. Ein Kettenförderer (1, 101) nach einem der vorhergehenden Ansprüche, wobei ein Flügel (6, 106), der bei einer Ringkette (2) eingesetzt wird, spiegelverkehrt ist zu einem Flügel (106'), der bei der anderen Ringkette (2) eingesetzt wird.

## Revendications

1. Transporteur à chaîne (1 ; 101), en particulier pour des produits alimentaires, comprenant deux chaînes d'anneaux (2) ayant chacune une pluralité respective d'anneaux (4, 5) raccordés entre eux, une pluralité de barres de support (3), dont chacune s'étend entre les deux chaînes d'anneaux (2) et est raccordée aux anneaux (4, 5) correspondants des chaînes d'anneaux (2), une roue dentée d'entraînement (9), qui est montée afin de tourner autour d'un axe de rotation (10) et amener les chaînes d'anneaux (2) le long d'une trajectoire donnée (P), et une pluralité d'ailes (6 ; 106 ; 106'), dont chacune est mise en prise avec une chaîne d'anneaux (2) respective afin de former un bord latéral (S) respectif, dans lequel les barres de support (3) définissent une surface de support (A) pour au moins un produit à transporter, et dans lequel chaque chaîne d'anneaux (2) comprend une pluralité de premiers anneaux (4), qui sont sensiblement parallèles à la surface de support (A), et une pluralité de seconds anneaux (5), qui sont alternés avec les premiers anneaux (4) et sont sensiblement perpendiculaires à la surface de support (A), et dans lequel chaque aile (6 ; 106 ; 106') est montée d'une manière amovible sur une seule barre (3) respective et sur un seul anneau (4, 5) respectif, **caractérisé en ce que** chaque aile (6 ; 106 ; 106') comprend une paroi de confinement (17), qui est transversale par rapport à la surface (A) et est sensiblement parallèle à la trajectoire (P), un bloc coulissant (18), qui est monté afin de coulisser sur un guide (7) respectif s'étendant le long de la trajectoire (P), et un élément de couplage (19 ; 19') qui est intercalé entre la paroi de confinement (17) et le bloc coulissant (18), dans lequel chaque élément de couplage (19 ; 19') comprend un corps tubulaire (26) ayant un axe (C) qui est transversal par rapport au guide (7) et parallèle à ladite surface (A), dans lequel le corps tubulaire (26) a une cavité (27) qui est appropriée pour loger une barre (3) et une ouverture radiale (28), qui établit un raccordement entre ladite cavité (27) et une zone externe, dans lequel le corps tubulaire (26) est monté autour d'une barre (3) respective, en particulier, l'ouverture (28) faisant face à l'extérieur dans une direction qui est opposée à la direction d'alimentation (V), dans lequel l'élément de couplage (19 ; 19') comprend, en outre, un appendice (29), qui fait axialement saillie à partir du corps tubulaire (26) vers la chaîne d'anneaux (2) respective, dans lequel l'appendice (29) comprend, à son tour, une butée (32) ayant des faces de contact (33), qui sont agencées en contact avec un anneau (4, 5) respectif, en particulier, la butée (32) s'appuyant contre l'anneau (4, 5) respectif.

2. Transporteur à chaîne (1 ; 101) selon la revendication 1, **caractérisé en ce que** l'élément de couplage (19) de chaque aile (6 ; 106 ; 106') met en prise un second anneau (5) respectif.

3. Transporteur à chaîne (101) selon l'une quelconque des revendications précédentes, **caractérisé en ce que** l'aile (106 ; 106') comprend un élément de percuteur (144), qui fait saillie du bloc coulissant (18) vers la chaîne (2) respective, dans lequel la butée (32) s'appuie contre une partie supérieure (5a) du second anneau (5), alors que l'élément de percuteur (144) est en contact avec une partie inférieure (5b) dudit second anneau (5), dans lequel l'élément de percuteur (144) s'étend longitudinalement sur le bloc coulissant (18) respectif afin d'avoir une zone en contact avec le second anneau (5) afin d'empêcher la torsion de l'aile (106 ; 106') autour d'un axe (B ; D) qui est transversal par rapport à ladite trajectoire (P).

4. Transporteur à chaîne (1 ; 101) selon l'une quelconque des revendications précédentes, **caractérisé en ce qu'**une aile (6 ; 106) appliquée sur une chaîne d'anneaux (2) se présente en miroir par rapport à une aile (106') appliquée sur l'autre chaîne d'anneaux (2).
